# EUROPEAN PATENT SPECIFICATION

(11) **EP 3 113 349 B1**
(45) Date of publication and mention of the grant of the patent: **30.01.2019**
(21) Application number: 15180636.1
(22) Date of filing: 11.08.2015
(51) Int. Cl.: H02M 5/257, B03C 3/68, H02M 7/06

(54) **A METHOD FOR CALCULATING THE PULSE FIRING PATTERN FOR A TRANSFORMER OF AN ELECTROSTATIC PRECIPITATOR AND ELECTROSTATIC PRECIPITATOR**
VERFAHREN ZUR BERECHNUNG DES IMPULSZÜNDMUSTERS FÜR EINEN TRANSFORMATOR EINES ELEKTROSTATISCHEN ABSCHEIDERS UND ELEKTROSTATISCHER ABSCHEIDER
PROCÉDÉ PERMETTANT DE CALCULER LE MOTIF DE MISE À FEU D'IMPULSION POUR UN TRANSFORMATEUR D'UN PRÉCIPITATEUR ÉLECTROSTATIQUE ET PRÉCIPITATEUR ÉLECTROSTATIQUE

(30) Priority: 29.06.2015 IN 1921DE2015
(43) Date of publication of application: 04.01.2017
(73) Proprietor: General Electric Technology GmbH, 5400 Baden (CH)
(72) Inventor: Williamsson, Carl Marcus, 34139 Ljungby (SE); Önnerby Pettersson, Inger Elisabeth, 352 42 Vaxjo (SE); Dash, Nanda Kishore, 751003 Bhubaneswar, Odisha (IN); Karlsson, Anders Nils Gustav, 352 51 Vaxjo (SE)
(74) Representative: General Electric Technology GmbH

(56) References cited:
- US-A- 4 648 887
- US-A- 4 704 672
- US-A- 5 311 420
- US-A- 5 378 978
- TACHIBANA N ET AL: "INTERMITTENT ENERGIZATION ON ELECTROSTATIC PRECIPITATORS", JOURNAL OF ELECTROSTATICS, ELSEVIER SCIENCE PUBLISHERS B.V. AMSTERDAM, NL, vol. 25, no. 1, 1 June 1990 (1990-06-01), pages 55-73, XP000148332, ISSN: 0304-3886, DOI: 10.1016/0304-3886(90)90037-V

## Description

### TECHNICAL FIELD

The present invention relates to a method for calculating the pulse firing pattern for a transformer of an electrostatic precipitator and electrostatic precipitator.

For example, the electrostatic precipitator is of the type used in a power plant or in an industrial application. Other applications with smaller electrostatic precipitators are anyhow possible.

### BACKGROUND

US 5 378 978 describes the closed loop control of an electrostatic precipitator using digital signal processing. This control requires sampling successive discrete values of the secondary voltage and secondary current during an individual half cycle of the alternating electric power source and additional values to determine present precipitator conditions. Based on the precipitator conditions processing means dynamically vary the control signals of the associated controls system.

Electrostatic precipitators are known to comprise a filter connected to a transformer in turn connected to a rectifier. Typically the transformer and the rectifier are embedded in one single unit. The filter is connected to a power supply, such as to the electric grid; the rectifier is in turn connected to collecting electrodes and discharge electrodes.

During operation the filter receives the electric power from the electric grid (e.g. this electric power can have sinusoidal voltage and current course) and skips some of the half waves of the electric power (e.g. voltage or current) according to a pulse firing pattern, generating a pulsed power that is supplied to the transformer.

The pulse firing pattern is a sequence of first elements indicative of a pulse to be fired and second elements indicative of a pulse to be not fired. The pulse firing pattern is defined as a pulse period or pulse firing pattern length having one first element and an even number of second elements; the pulse period thus has an odd number of elements.

If the transformer is supplied with a pulsed power having two or more successive pulses of the same polarity (i.e. positive or negative), this would cause a risk of saturation of the transformer. For this reason the pulse firing patterns traditionally used have one first element and an even number of second elements.

In addition, traditionally supply of pulsed power was only done to adapt the power sent to the collecting electrodes and discharge electrodes to the properties of the flue gas (e.g. in terms of resistivity), whereas energy management (to regulate the power sent to the collecting electrodes and discharge electrodes) was done by regulating the amplitude of the pulses.

Nevertheless, since when using pulse firing patterns only some but not all power from the electric grid is supplied to the collecting electrodes and discharge electrodes, the pulse firing patterns limit the power supplied to the collecting electrodes and discharge electrodes.

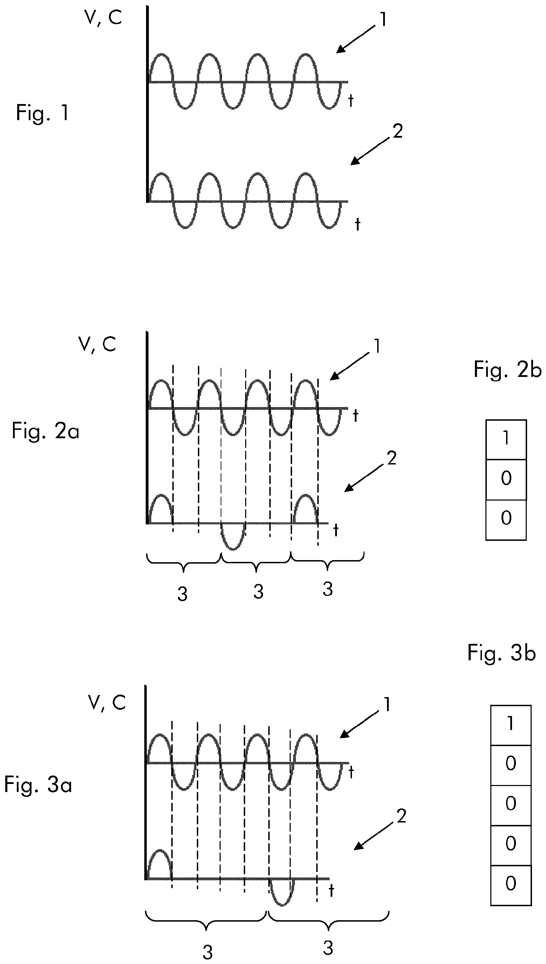

Figures 1, 2a, 2b, 3a, 3b show the voltage or current supplied to the transformer.

Figure 1 shows the case when no pulse firing pattern is applied and all power from the electric grid is supplied to the transformer. In particular, reference 1 identifies the voltage or current supplied from the grid to the filter and reference 2 the voltage or current supplied from the filter to the transformer. In this case 100% of the power from the electric grid is supplied to the transformer and thus to the collecting electrodes and discharge electrodes.

Figure 2a shows the case when the pulse firing pattern of figure 2b is applied at the filter and only 1/3 of the power from the electric grid is forwarded to the transformer, while 2/3 of the power from the electric grid is blocked at the filter and not supplied to the transformer. Also in this case, reference 1 identifies the voltage or current supplied from the grid to the filter and reference 2 the voltage or current supplied from the filter to the transformer. The curly brackets 3 identify the pulse period or pulse firing pattern length. In this case 33% of the power from the electric grid is supplied to the transformer and thus to the collecting electrodes and discharge electrodes.

Figure 3a shows the case when the pulse firing pattern of figure 3b is applied and 1/5 of the power from the electric grid is forwarded to the transformer and 4/5 of the power from the electric grid is blocked at the filter and not supplied to the transformer. In this case as well, reference 1 identifies the voltage or current supplied from the grid to the filter, reference 2 the voltage or current supplied from the filter to the transformer and the curly brackets 3 identify the pulse period or pulse firing pattern length. In this case 20% of the power from the electric grid is supplied to the transformer and thus to the collecting electrodes and discharge electrodes.

It is thus apparent that the step between use of no pulse firing pattern (figure 1) and use of the pulse firing pattern that allows supply of the largest power to the collecting electrodes and discharge electrodes (figure 2a, 2b) corresponds to 67% of the power supplied from the electric grid.

This large power step could not allow optimal operation, because only in case the features of the gas being treated allow supply of the collecting electrodes and discharge electrodes with only 33% of the power supplied from the grid it is possible the use of pulse firing pattern; if use of 33% of the power from the grid is not possible in view of the features of the gas being treated, it is needed operation without pulse firing pattern. In other words, if the features of the gas could require use of a pulse firing pattern corresponding to e.g. 50% of the power from the electric grid, it is not possible operation with the pulse firing pattern, because use of the pulse firing pattern would allow supplying the collecting electrodes and discharge electrodes with only 33% of the power from the electric grid. It would thus be needed operation without pulse firing pattern.

In addition, power regulation made via amplitude reduction (of voltage and/or current), as traditionally done, affects the corona discharge from the discharge electrodes and thus negatively affects dust charging (that occurs via corona) and therefore dust collection at the collecting electrodes.

### SUMMARY

An aspect of the invention includes providing a method and an electrostatic precipitator that allow an improvement of the regulation of the power supplied to the collecting electrodes and discharge electrodes. Advantageously according to the invention fine regulation can be achieved.

These and further aspects are attained by providing a method and an electrostatic precipitator in accordance with the accompanying claims.

Advantageously, amplitude regulation (voltage and/or current) is not needed for regulation, such that amplitude regulation does not affect or can be made to affect to a limited extent the corona discharge.

### BRIEF DESCRIPTION OF THE DRAWINGS

Further characteristics and advantages will be more apparent from the description of a preferred but non-exclusive embodiment of the pulse firing pattern and electrostatic precipitator, illustrated by way of nonlimiting example in the accompanying drawings, in which:
Figure 1 shows the voltage or current entering and moving out of a filter when no pulse firing pattern is used (prior art);
Figure 2a shows the voltage or current entering and moving out of a filter when the pulse firing pattern shown in figure 2b is used (prior art);
Figure 2b shows a pulse firing pattern (prior art);
Figure 3a shows the voltage or current entering and moving out of a filter when the pulse firing pattern shown in figure 3b is used (prior art);
Figure 3b shows a pulse firing pattern (prior art);
Figure 4 shows an electrostatic precipitator;
Figure 5 shows the voltage or current at different positions of the electrostatic precipitator.

### DETAILED DESCRIPTION OF EXEMPLARY EMBODIMENTS

In the following the electrostatic precipitator is described first.

The electrostatic precipitator 9 comprises a filter 10 connected to a power input 11; the filter 10 is arranged for filtering an input power from the power input 11, generating a pulsed power according to a pulse firing pattern.

A control unit 13 is connected to the filter 10 in order to drive it and implement the pulsed firing pattern. For example, the filter can comprise transistors or other types of electronic switches 14.

A transformer 16 is connected to the filter 10; the transformer 16 is arranged for transforming the pulsed power from the filter 10 into a transformed pulsed power.

A rectifier 17 is connected to the transformer 16; the rectifier 17 is arranged for rectifying the transformed pulsed power generating a rectified pulsed power.

Collecting electrodes and discharge electrodes 19 are connected to the rectifier 17 for receiving the rectified pulsed power. The collecting electrodes and discharge electrodes 19 are immersed in a path where the flue gas to be cleaned passes through.

The control unit 10 drives the electronic switches 14 to pass to an electric conductive state or electric nonconductive state according to the pulsed firing pattern.

The pulse firing pattern comprises:
- first elements indicative of a pulse to be fired; these elements are indicated as "1" ;
- second elements indicative of a pulse to not be fired, these elements are indicated as "0".

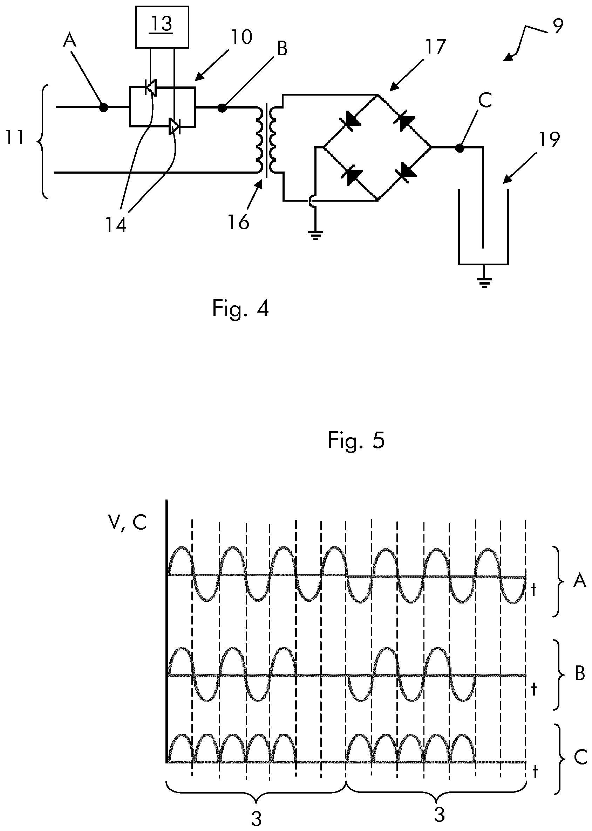

Figure 5 shows the voltage or power at different positions A, B, C of the electrostatic precipitator 9.

The power input 11 (e.g. electric grid) supplies electric power whose voltage or current has e.g. sinusoidal course (fig. 6, position A). At the filter 10 only the half waves in correspondence of a "1" of the pulsed firing pattern are allowed to pass through, whereas half waves in correspondence of "0" of the pulse firing pattern are blocked.

Figure 5, position B shows the voltage or current downstream of the filter 10 and upstream of the transformer 16.

After the transformer, the electric power is rectified at the rectifier 17; Figure 5, position C shows the voltage or current downstream of the rectifier 17.

Since according to the method any desired or required power can be obtained by calculating the pulse firing pattern, power regulation by amplitude regulation is not needed.

The method for calculating the pulse firing pattern for a transformer of an electrostatic precipitator comprises:
a) defining a target parameter indicative of the power to be supplied to the collecting electrodes and discharge electrodes 19;
b) calculating a first parameter indicative of the power supplied to the collecting electrodes and discharge electrodes 19 using the pulse firing pattern being calculated, in case one additional pulse is fired,
c) calculating a second parameter indicative of the power supplied to the collecting electrodes and discharge electrodes 19 using the pulse firing pattern being calculated, in case two additional successive pulses are not fired,
d) selecting pattern elements between one first element or two second elements on the basis of the first parameter or second parameter,
e) repeating steps b), c), d), e).

Selecting pattern elements can be done:
- on the basis of which parameter between the first parameter or second parameter falls closer to the target parameter or, in case this is not possible, because e.g. none of the first parameter or second parameter falls closer to the target parameter (e.g. the first parameter and second parameter have the same distance from the target parameter)

- a given pattern element can be selected; e.g. in this case the pattern element "1" could be selected; alternatively it is also possible to select the pattern element "0".

As for the step e), it is also possible that the step e) also comprises repeating the step a) in addition to repeating steps b) though e).

In this embodiment the target parameter can be supplied to e.g. the control unit 13 in any moment, such that the pulse firing pattern that is implemented in the electrostatic precipitator allows a power transfer to the collecting electrodes and discharge electrodes 19 always moving towards the target parameter.

The continuous repetition can be implemented by defining a pattern period or pulse firing pattern length and calculating the first parameter and the second parameter on the basis of the pattern period or pulse firing pattern length.

For example, a start and an end can be defined in the pulse firing pattern; the start corresponds to the element added first to the pulse firing pattern and the end to the element added last to the pulse firing pattern, i.e. the additional elements are added to the end of the pulse firing pattern.

Thus, calculating the first parameter and the second parameter on the basis of the pattern period can comprise:
- calculating the first parameter indicative of the power supplied to the electrostatic precipitator using a pulse firing pattern having
   o the defined pulse period or pulse firing pattern length, and
   o one additional first element at the end, and
   o deprived of one element at the start;
- calculating a second parameter indicative of the power supplied to the electrostatic precipitator using a pulse firing pattern having
   o the defined pulse period, and
   o two additional second elements at the end, and
   o deprived of two elements at the start.

Naturally continuous re-calculation (implementing by the feature e) above) can also be implemented without repeating the step a).

In the following an example of implementation of the method is described in detail. In this example it is supposed that the pattern period or pulse firing pattern length is equal to 5 (this is only a simplification, in real cases the pattern period can be in the order of thousand or ten of thousand, e.g. 10000 or more; a long pattern period or pulse firing pattern length helps matching the power associated with the pulse firing pattern being calculated with the target parameter e.g. up to two decimals or with even more accuracy). In the following example step a) is not repeated.

### STEP a)

A target parameter of e.g. 50% of the power supplied from the grid and to be supplied to the collecting electrodes and discharge electrodes 19 is defined.

The target parameter can be defined on the basis of the features of the gas to be cleaned and/or can be manually entered; for example the gas comes from a power plant or industrial plant.

At this stage the pulse firing pattern does not include any first elements "1" or second elements "0".

### STEP b)

In case one additional pulse is fired (i.e. a pulse firing pattern "1" is implemented such that all power from the power input 11 is forwarded to the transformer 16) 100% of the power from the power input 11 is supplied to the electrodes 19.

### STEP c)

In case two additional pulses are not fired (i.e. a pulse firing pattern "0,0" is implemented) 0% of the power from the power input 11 is supplied to the electrodes 19.

### STEP d)

The element "1" corresponding to 100% power is selected for the pulse firing pattern; therefore after a first cycle the pulse firing pattern being calculated is: "1". One pulse can thus be forwarded to the collecting electrodes and discharge electrodes 19.

### STEP e) (first repetition STEP b)

In case one additional pulse is fired (i.e. a pulse firing pattern "1,1" is implemented and also in this case all the power from the power input 11 is forwarded to the transformer 16) 100% of the power from the power input 11 is supplied to the electrodes 19.

### STEP e) (first repetition STEP c)

In case two additional pulses are not fired (i.e. a pulse firing pattern "1,0,0" is implemented) 33% of the power from the power input 11 is supplied to the electrodes 19.

### STEP e) (first repetition STEP d)

The element "0,0" corresponding to 33% power is selected for the pulse firing pattern that; therefore after a first cycle the pulse firing pattern being calculated is: "1,0,0". Two pulses are thus not forwarded to the collecting electrodes and discharge electrodes 19.

### STEP e) (second repetition STEP b)

In case one additional pulse is fired (i.e. a pulse firing pattern "1,0,0,1" is implemented) 50% of the power from the power input 11 is supplied to the electrodes 19.

### STEP e) (second repetition STEP c)

In case two additional pulses are not fired (i.e. a pulse firing pattern "1,0,0,0,0" is implemented) 20% of the power from the power input 11 is supplied to the electrodes 19.

### STEP e) (second repetition STEP d)

The element "1" corresponding to 50% power is selected for the pulse firing pattern that, after a second cycle, is: "1,0,0,1". One pulse can thus be forwarded to the collecting electrodes and discharge electrodes 19.

### STEP e) (third repetition STEP b)

In case one additional pulse is fired (i.e. a pulse firing pattern "1,0,0,1,1" is implemented) 60% of the power from the power input 11 is supplied to the electrodes 19.

### STEP e) (third repetition STEP c)

In case two additional pulses are not fired (i.e. a pulse firing pattern "0,0,1,0,0" is implemented) 20% of the power from the power input 11 is supplied to the electrodes 19.

### STEP e) (third repetition STEP d)

The element "1" corresponding to 60% power is selected for the pulse firing pattern; therefore after the third cycle the pulse firing pattern being calculated is: "1,0,0,1,1". One pulse can thus be forwarded to the collecting electrodes and discharge electrodes 19.

### STEP e) (fourth repetition STEP b)

In case one additional pulse is fired (i.e. a pulse firing pattern "0,0,1,1,1" is implemented) 60% of the power from the power input 11 is supplied to the electrodes 19.

### STEP e) (fourth repetition STEP c)

In case two additional pulses are not fired (i.e. a pulse firing pattern "0,1,1,0,0" is implemented) 40% of the power from the power input 11 is supplied to the electrodes 19.

### STEP e) (fourth repetition STEP d)

The given element "1" corresponding to 60% power is selected for the pulse firing pattern that, after a fourth cycle, is: "0,0,1,1,1". One pulse can thus be forwarded to the collecting electrodes and discharge electrodes 19.

The steps are b) through e) are then continuously implemented.

Therefore, the pulse firing pattern can be continuously generated. This allows to reach a pulse firing pattern that is equal to the target parameter or as close as possible to the target parameter. In addition this allows to change the target parameter and define a pulse firing pattern matching or close to the target parameter.

In case also step a) in the example above is repeated, the process remains the same, with the only different that the target parameter is changed.

The control unit 13 implements the method and preferably has a computer readable memory medium containing instructions to implement the method.

Naturally the features described may be independently provided from one another.

### REFERENCE NUMBERS

- 1: voltage or current supplied from the grid to the filter
- 2: voltage or current supplied from the filter to the transformer
- 3: pulse firing pattern length
- 9: electrostatic precipitator
- 10: filter
- 11: power input
- 13: control unit
- 14: electronic switch
- 16: transformer
- 17: rectifier
- 19: Collecting electrodes and discharge electrodes
- A, B, C: positions

## Claims

1. A method for calculating the pulse firing pattern of electric power pulses, each pulse corresponding to a half wave of electric input power, to be applied to a transformer (16) of an electrostatic precipitator (9), the electrostatic precipitator (9) comprising a rectifier (17) connected to the secondary side of the transformer (16), and collecting electrodes and discharge electrodes (19) connected to the rectifier (17), wherein the pulse firing pattern is a sequence of at least one first element indicative of a pulse to be fired and an even number of second elements indicative of a pulse to be not fired and has a length defined by a start and an end, wherein the start corresponds to the element added first and the end to the element added last; the method comprising
a) defining a target parameter indicative of the power to be supplied to collecting electrodes and discharge electrodes (19) of the electrostatic precipitator (9),
b) calculating a first parameter indicative of the power supplied to the collecting electrodes and discharge electrodes (19) using the pulse firing pattern being calculated, in case one additional pulse is fired,
c) calculating a second parameter indicative of the power supplied to the collecting electrodes and discharge electrodes (19) using the pulse firing pattern being calculated, in case two additional successive pulses are not fired,
d) selecting either one first element or two second elements as the next one or two pattern elements of the pulse firing pattern on the basis of the first parameter or second parameter, such that the pulse firing pattern that is implemented in the electrostatic precipitator (9) allows a power transfer to the collecting electrodes and discharge electrodes (19) always moving towards the target parameter.
e) repeating steps b), c), d), e).

2. The method of claim 1, **characterized in that** selecting at least one pattern element comprises selecting the parameter between the first parameter or the second parameter that falls closer to the target parameter.

3. The method of claim 1, **characterized in that** selecting at least one pattern element comprises selecting a given pattern element when the first parameter and second parameter have the same distance from the target parameter.

4. The method of claim 1, **characterized in that** step e) also comprises repeating step a).

5. The method of claim 1, **characterized by**
defining a pulse firing pattern length,
calculating the first parameter and the second parameter on the basis of the pulse firing pattern length.

6. The method of claim 5, **characterized in that**
calculating the first parameter and the second parameter on the basis of the pulse firing pattern length comprises
calculating a first parameter indicative of the power supplied to the electrostatic precipitator (9) using a pulse firing pattern having the pulse firing pattern length and one additional first element and deprived of one element at the start;
calculating a second parameter indicative of the power supplied to the electrostatic precipitator (9) using a pulse firing pattern having the pulse firing pattern length and two additional second elements and deprived of two elements at the start.

7. A computer readable memory medium containing instructions which, when the instructions are executed by a control unit of an electrostatic precipitator, cause the control unit to carry out the method of any of claims 1 to 6.

8. An electrostatic precipitator (9) comprising
a filter (10) connected to a power input (11), the filter (10) for filtering an input power generating a pulsed power according to a pulse firing pattern,
a control unit (13) connected to the filter (10),
a transformer (16) having its primary side connected to the filter (10), the transformer (16) for transforming the pulsed power into an transformed pulsed power,
a rectifier (17) connected to the secondary side of the transformer (16),
the rectifier (17) for rectifying the transformed pulsed power generating a rectified pulsed power, collecting electrodes and discharge electrodes (19) connected to the rectifier (17) for receiving the rectified pulsed power,
**characterized in that** the control unit (13) is arranged to implement a method according to any of claims 1 to 6.

9. An electrostatic precipitator according to claim 8, **characterized in that** after step d) and before step e) the control unit implements the pattern element.

10. An electrostatic precipitator (9) according to claim 8 or 9, **characterized by** further comprising a computer readable memory according to claim 7.

## Patentansprüche

1. Verfahren zum Berechnen des Impulszündmusters von elektrischen Energieimpulsen, wobei jeder Impuls einer Halbwelle von elektrischer Eingangsenergie entspricht, die auf einen Transformator (16) eines elektrostatischen Abscheiders (9) anzuwenden ist, wobei der elektrostatische Abscheider (9) einen mit der sekundären Seite des Transformators (16) verbundenen Gleichrichter (17) und mit dem Gleichrichter (17) verbundene Sammelelektroden und Entladungselektroden (19) umfasst, wobei das Impulszündmuster eine Sequenz von mindestens einem ersten Element ist, das anzeigt, dass ein Impuls gezündet werden soll, und einer geraden Anzahl von zweiten Elementen, die anzeigen, dass ein Impuls nicht gezündet werden soll, und eine Länge aufweist, die von einem Beginn und einem Ende definiert ist, wobei der Beginn dem Element entspricht, das zuerst hinzugefügt wurde, und das Ende dem Element, das zuletzt hinzugefügt wurde; wobei das Verfahren umfasst
a) Definieren eines Zielparameters, der die an den Sammelelektroden und Entladungselektroden (19) des elektrostatischen Abscheiders (9) angelegte Energie anzeigt,
b) Berechnen eines ersten Parameters, der die unter Verwendung des zu berechnenden Impulszündmusters an den Sammelelektroden und Entladungselektroden (19) angelegte Energie anzeigt, wenn ein zusätzlicher Impuls gezündet wird,
c) Berechnen eines zweiten Parameters, der die unter Verwendung des zu berechnenden Impulszündmusters an den Sammelelektroden und Entladungselektroden (19) angelegte Energie anzeigt, wenn zwei zusätzliche aufeinander folgende Impulse nicht gezündet werden,
d) Auswählen von entweder einem ersten Element oder zwei zweiten Elementen als das Nächste oder von zwei Musterelementen des Impulszündmusters auf der Grundlage des ersten Parameters oder zweiten Parameters, so dass das Impulszündmuster, das im elektrostatischen Abscheider (9) implementiert ist, eine Energieübertragung an die Sammelelektroden und Entladungselektroden (19), die sich immer auf den Zielparameter zubewegt, ermöglicht.
e) Wiederholen der Schritte b), c), d), e).

2. Verfahren nach Anspruch 1, **dadurch gekennzeichnet, dass** das Auswählen von mindestens einem Musterelement das Auswählen des Parameters zwischen dem ersten Parameter oder dem zweiten Parameter, der näher am Zielparameter liegt, umfasst.

3. Verfahren nach Anspruch 1, **dadurch gekennzeichnet, dass** das Auswählen von mindestens einem Musterelement das Auswählen eines bestimmten Musterelements umfasst, wenn der erste Parameter und der zweite Parameter den gleichen Abstand vom Zielparameter aufweisen.

4. Verfahren nach Anspruch 1, **dadurch gekennzeichnet, dass** Schritt e) auch das Wiederholen von Schritt a) umfasst.

5. Verfahren nach Anspruch 1, **gekennzeichnet durch**
Definieren einer Länge des Impulszündmusters,
Berechnen des ersten Parameters und des zweiten Parameters auf der Grundlage der Länge des Impulszündmusters.

6. Verfahren nach Anspruch 5, **dadurch gekennzeichnet, dass** das Berechnen des ersten Parameters und des zweiten Parameters auf der Grundlage der Länge des Impulszündmusters umfasst
Berechnen eines ersten Parameters, der die an den elektrostatischen Abscheider (9) angelegte Energie anzeigt, unter Verwendung eines Impulszündmusters, das die Länge des Impulszündmusters und ein zusätzliches erstes Element aufweist, und dem ein Element bei Beginn entzogen ist;
Berechnen eines zweiten Parameters, der die an den elektrostatischen Abscheider (9) angelegte Energie anzeigt, unter Verwendung eines Impulszündmusters, das die Länge des Impulszündmusters und zwei zusätzliche zweite Elemente aufweist, und dem ein Element bei Beginn entzogen ist.

7. Computerlesbares Speichermedium, das Anweisungen enthält, die, wenn die Anweisungen von einer Steuereinheit eines elektrostatischen Abscheiders ausgeführt werden, verursacht, dass die Steuereinheit das Verfahren nach einem der Ansprüche 1 bis 6 durchführt.

8. Elektrostatischer Abscheider (9), umfassend
einen mit einem Energieeinlass (11) verbundenen Filter (10), wobei der Filter (10) zum Filtern einer Eingangsenergie eine Impulsenergie nach einem Impulszündmuster erzeugt,
eine mit dem Filter (10) verbundene Steuereinheit (13),
einen Transformator (16), dessen primäre Seite mit dem Filter (10) verbunden ist, wobei der Transformator (16) die gepulste Energie in eine transformierte gepulste Energie transformiert,
einen mit der sekundären Seite des Transformators (16) verbundenen Gleichrichter (17), wobei der Gleichrichter (17) die transformierte gepulste Energie zum Erzeugen einer gleichgerichteten gepulsten Energie gleichrichtet,
mit dem Gleichrichter (17) verbundene Sammelelektroden und Entladungselektroden (19) zum Empfangen der gleichgerichteten gepulsten Energie,
**dadurch gekennzeichnet, dass** die Steuereinheit (13) angeordnet ist, um ein Verfahren nach einem der Ansprüche 1 bis 6 zu implementieren.

9. Elektrostatischer Abscheider nach Anspruch 8, **dadurch gekennzeichnet, dass** nach Schritt d) und vor Schritt e) die Steuereinheit das Musterelement implementiert.

10. Elektrostatischer Abscheider (9) nach Anspruch 8 oder 9, **dadurch gekennzeichnet, dass** es weiter umfasst einen computerlesbaren Speicher nach Anspruch 7.

## Revendications

1. Procédé de calcul du motif de mise à feu d'impulsions d'énergie électrique, chaque impulsion correspondant à une demi-onde de puissance d'entrée électrique à appliquer à un transformateur (16) d'un dispositif de précipitation électrostatique (9), le dispositif de précipitation électrostatique (9) comprenant un redresseur (17) connecté au côté secondaire du transformateur (16) et des électrodes collectrices et des électrodes de décharge (19) connectées au redresseur (17), dans lequel le motif de mise à feu d'impulsion est une séquence d'au moins un premier élément indicatif d'une impulsion de mise à feu et d'un nombre pair de seconds éléments indicatifs d'une impulsion de non mise à feu et a une longueur définie par un début et une fin, dans lequel le début correspond à l'élément ajouté en premier et la fin à l'élément ajouté en dernier ; le procédé comprenant :
a) la définition d'un paramètre cible indicatif de la puissance à fournir aux électrodes collectrices et aux électrodes de décharge (19) du dispositif de précipitation électrostatique (9),
b) le calcul d'un premier paramètre indicatif de la puissance fournie aux électrodes collectrices et aux électrodes de décharge (19) en utilisant le motif de mise à feu d'impulsion qui est calculé dans le cas où une seule impulsion supplémentaire est mise à feu,
c) le calcul d'un second paramètre indicatif de la puissance fournie aux électrodes collectrices et aux électrodes de décharge (19) en utilisant le motif de mise à feu d'impulsion qui est calculé, dans le cas où deux impulsions successives supplémentaires ne sont pas mises à feu,
d) la sélection d'un premier élément ou de deux seconds éléments comme les un ou deux éléments de motif suivants de mise à feu d'impulsion sur la base du premier paramètre ou du second paramètre de sorte que le motif de mise à feu d'impulsion qui est mis en oeuvre dans le dispositif de précipitation électrostatique (9) permette un transfert de puissance aux électrodes collectrices et aux électrodes de décharge (19) en se déplaçant toujours vers le paramètre cible,
e) la répétition des étapes b), c), d), e).

2. Procédé selon la revendication 1, **caractérisé en ce que** la sélection d'au moins un élément de motif comprend la sélection du paramètre entre le premier paramètre ou le second paramètre qui se trouve le plus proche du paramètre cible.

3. Procédé selon la revendication 1, **caractérisé en ce que** la sélection d'au moins un élément de motif comprend la sélection d'un élément de motif donné lorsque le premier paramètre et le second paramètre ont la même distance vis-à-vis du paramètre cible.

4. Procédé selon la revendication 1, **caractérisé en ce que** l'étape e) comprend également la répétition de l'étape a).

5. Procédé selon la revendication 1, **caractérisé par**
la définition d'une longueur de motif de mise à feu d'impulsion,
le calcul du premier paramètre et du second paramètre sur la base de la longueur de motif de mise à feu d'impulsion.

6. Procédé selon la revendication 5, **caractérisé en ce que**
le calcul du premier paramètre et du second paramètre sur la base de la longueur du motif de mise à feu d'impulsion comprend :
le calcul d'un premier paramètre indicatif de la puissance fournie au dispositif de précipitation électrostatique (9) en utilisant un motif de mise à feu d'impulsion ayant la longueur de motif de mise à feu d'impulsion et un premier élément supplémentaire et dépourvu d'un élément au début ;
le calcul d'un second paramètre indicatif de la puissance fournie au dispositif de précipitation électrostatique (9) en utilisant un motif de mise à feu d'impulsion ayant la longueur du motif de mise à feu d'impulsion et deux seconds éléments supplémentaires et dépourvu de deux éléments au début.

7. Support de mémoire lisible par ordinateur contenant des instructions qui, lorsque les instructions sont exécutées par une unité de commande d'un dispositif de précipitation électrostatique, amènent l'unité de commande à effectuer le procédé selon l'une quelconque des revendications 1 à 6.

8. Dispositif de précipitation électrostatique (9) comprenant
un filtre (10) raccordé à une entrée de puissance (11), le filtre (10) étant destiné à filtrer une puissance d'entrée générant une puissance pulsée selon un motif de mise à feu d'impulsion,
une unité de commande (13) connectée au filtre (10),
un transformateur (16) ayant son côté primaire connecté au filtre (10), le transformateur (16) étant destiné à transformer la puissance pulsée en une puissance pulsée transformée,
un redresseur (17) connecté au côté secondaire du transformateur (16),
le redresseur (17) étant destiné à redresser la puissance pulsée transformée en générant une puissance pulsée redressée,
des électrodes collectrices et des électrodes de décharge (19) connectées au redresseur (17) pour recevoir la puissance pulsée redressée,
**caractérisé en ce que** l'unité de commande (13) est agencée pour mettre en oeuvre un procédé selon l'une quelconque des revendications 1 à 6.

9. Dispositif de précipitation électrostatique selon la revendication 8, **caractérisé en ce que**, après l'étape d) et avant l'étape e), l'unité de commande met en oeuvre l'élément de motif.

10. Dispositif de précipitation électrostatique (9) selon la revendication 8 ou 9, **caractérisé en ce qu'**il comprend en outre une mémoire lisible par ordinateur selon la revendication 7.
